(19) Europäisches Patentamt
European Patent Office
Office européen des brevets

(11) Veröffentlichungsnummer: **0 243 889**
**A1**

(12) # EUROPÄISCHE PATENTANMELDUNG

(21) Anmeldenummer: **87105977.0**

(22) Anmeldetag: **23.04.87**

(51) Int.Cl.³: **B 01 D 53/34**
C 10 K 1/10, C 10 K 1/12

(30) Priorität: **24.04.86 LU 86407**

(43) Veröffentlichungstag der Anmeldung:
**04.11.87 Patentblatt 87/45**

(84) Benannte Vertragsstaaten:
**AT BE CH DE ES FR GB GR IT LI LU NL SE**

(71) Anmelder: **EUROPÄISCHE ATOMGEMEINSCHAFT (EURATOM)**
**Bâtiment Jean Monnet Plateau du Kirchberg**
**L-2920 Luxembourg(LU)**

(72) Erfinder: **Langenkamp, Heinrich W.**
**Via Matteotti 112**
**I-21027 Cardezzate (Va)(IT)**

(72) Erfinder: **Van Velzen, Daniel**
**Via Buonarroti 9**
**I-21020 Brebbia (Va)(IT)**

(74) Vertreter: **Weinmiller, Jürgen**
**Lennéstrasse 9 Postfach 24**
**D-8133 Feldafing(DE)**

(54) **Verfahren und Vorrichtung zur Entstickung von Rauchgasen.**

(57) Die Erfindung bezieht sich auf die Entstickung von Rauchgasen durch Absorption der Stickoxide in einer wässrigen Lösung eines Metallkomplexes, insbesondere eines Eisen(II)-Ethylendiamintetraacetat-Komplexes.

Die Stickoxide werden in der Absorbersäule (12) von dem Eisenkomplex absorbiert und dann wieder von diesem im kathodischen Abteil einer Elektrolysezelle (4) durch Reduktion abgespalten.

Die Erfindung ist insbesondere auf ein kombiniertes Verfahren zur Entfernung von Schwefel und Stickstoff aus Rauchgasen anwendbar, bei dem im Rahmen der Entschwefelung Bromsäure gebildet wird. Diese Bromsäure kann im anodischen Abteil derselben Elektrolysezelle wieder in Brom und Wasserstoff aufgespalten werden.

EP 0 243 889 A1

./...

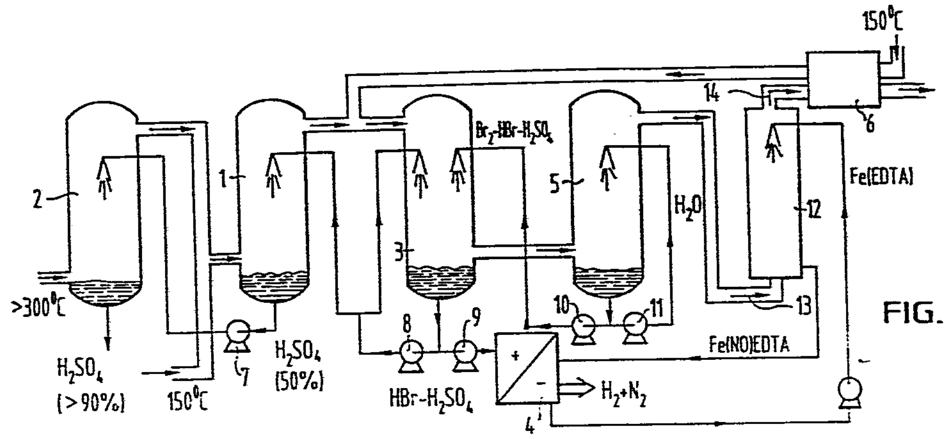

150°C
14
6
Br2-HBr-H2SO4
Fe(EDTA)
2
1
5
H2O
12
3
>300°C
13
8
9
10
11
H2SO4
(>90%)
150°C
7
H2SO4
(50%)
HBr-H2SO4
Fe(NO)EDTA
H2+N2
4


FIG. 2

# VERFAHREN UND VORRICHTUNG ZUR ENTSTICKUNG VON RAUCHGASEN

Die Erfindung bezieht sich auf ein Verfahren zur Entstickung von Rauchgasen durch Absorption der Stickoxide in einer wässrigen Lösung eines Metallkomplexes, wobei das Metall aus der Gruppe gewählt wird, die zumindest Eisen enthält. Die Erfindung bezieht sich außerdem auf eine Vorrichtung zur Durchführung dieses Verfahrens.

Die Entstickung von Rauchgasen gewinnt in letzter Zeit besondere Bedeutung, seit den Stickoxiden Mitschuld an sauren Niederschlägen und Waldschäden beigemessen wird. In der Zeitschrift Chem. Ing. Tech. 57 (1985) N° 9, Seiten 717 bis 727 sind die wichtigsten heute bekannten Verfahren zur Minderung von Stickoxidemissionen in Rauchgasen aufgezählt. Die heute in vielen europäischen Ländern geforderten höchstzulässigen Werte an Stickoxiden im Rauchgas des Kamins können nur eingehalten werden, wenn zusätzlich zu einer Optimierung des Verbrennungsvorgangs Rauchgasreinigungsverfahren angewandt werden.

Bei einem der in dem obigen Aufsatz erwähnten bekannten Verfahren erfolgt eine simultane Absorption von Schwefeldioxid und Stickoxiden. Als Komplexbildner für NO werden geringe Mengen Eisen(II)-Ethylendiamintetraacetat verwendet. In Lösung erfolgt dann eine Reduktion des NO durch die gebildeten Sulfit-Ionen. Neben den Hauptreaktionen treten jedoch zahlreiche Nebenreaktionen auf, die die Rückspeisung der Reagentien erschweren und teure Hilfsreinigungskreise erforderlich machen.

Aufgabe der Erfindung ist es, ein Verfahren und eine Vorrichtung zur Entstickung von Rauchgasen anzugeben, bei denen die erwähnten Nachteile nicht mehr auftreten.

Diese Aufgabe wird erfindungsgemäß durch ein Verfahren gemäß Anspruch 1 gelöst. Bezüglich bevorzugter Ausführungsformen dieses Verfahrens wird auf die Verfahrensunteransprüche verwiesen. Eine erfindungsgemäße Vorrichtung zur Durchführung dieses Verfahrens ist Gegenstand des Vorrichtungsanspruchs 5.

Nachfolgend wird die Erfindung anhand eines bevorzugten Ausführungsbeispiels mithilfe der Zeichnungen näher erläutert.

Fig. 1 zeigt ein Flußdiagramm einer erfindungsgemäßen Vorrichtung zur Entstickung von Rauchgas.

Fig. 2 zeigt das Schema einer Anlage, in der dem Rauchgas zuerst Schwefeldioxid entzogen wird und daran anschließend die Stickoxide gemäß dem erfindungsgemäßen Verfahren entfernt werden.

Das erfindungsgemäße Verfahren beruht auf der Absorption der Stickoxide in einer wässrigen Lösung eines Metallchelatkomplexes. Als Metall kommt Eisen, Kobalt oder Nickel in Frage, wobei ersteres bevorzugt wird. Während der Absorption bildet sich ein Metall(NO)-Komplex, d.h. Stickoxid ist in das Molekül eingebaut. Diese Absorption von Stickoxid erfolgt auch in dem oben erwähnten bekannten Verfahren.

Im Gegensatz zu diesem bekannten Verfahren wird dieser Komplex

erfindungsgemäß elektrolytisch an der Kathode einer elektrolytischen Zelle aufgespalten. Dabei entstehen wieder der ursprüngliche Metallkomplex sowie Stickstoff und Wasser. Nebenprodukte, wie sie bei dem bekannten Verfahren sehr störend in Erscheinung treten, gibt es hier praktisch nicht. Die im Kathodenabteil der Elektrolysezelle ablaufende Reaktion läßt sich durch folgende Reaktionsgleichung beschreiben, wobei angenommen wird, daß der Metallkomplex ein Eisenkomplex ist und daß der Komplexbildner Ethylendiamintetraacetatsäure (EDTA) ist.

$$2\ Fe(NO)EDTA + 4\ H^+ + 4\ e \Longrightarrow 2\ Fe(EDTA) + N_2 + H_2O$$

In Fig. 1 ist schematisch eine Vorrichtung gezeigt, in der das erfindungsgemäße Verfahren ablaufen kann. Sie besteht im wesentlichen aus einer Absorbersäule 12 und einer Elektrolysezelle 4. Die zu reinigenden Rauchgase 13 werden der Absorbersäule 12 von unten zugeführt und verlassen die Säule als gereinigtes Rauchgas 14 am oberen Ende in Richtung auf einen Kamin. Die Absorbersäule wird von oben nach unten von einer Waschflüssigkeit durchrieselt, die aus einer wässrigen Lösung eines Eisenchelatkomplexes, insbesondere des Fe(II)EDTA-Komplexes besteht. Die die Absorbersäule unten verlassende Flüssigkeit besteht aus einem Fe(NO)EDTA-Komplex. Diese Flüssigkeit gelangt dann in das Kathodenabteil der Elektrolysezelle 4, in deren Anodenabteil z.B. Bromwasserstoffsäure eingespeist wird. Durch Anlegen einer elektrischen Gleichspannung zwischen der Kathode 15 und der Anode 16 erreicht man eine Aufspaltung des in das Kathodenabteil eingespeisten Komplexes in Stickstoff $N_2$, der entweicht, und in den ursprünglichen Fe(EDTA)-Komplex, der wieder in die Absorbersäule 1 rückgespeist werden kann. Im Anodenabteil wird aus Bromwasserstoffsäure Brom geformt.

Im Rahmen der Erfindung wäre es auch möglich, andere Reaktionen im Anodenabteil der Elektrolysezelle durchzuführen. Die soeben erwähnte Aufspaltung von Bromsäure in molekularen Brom

bietet sich besonders an, wenn das erfindungsgemäße Verfahren mit einem Verfahren zum Entfernen von Schwefeldioxid aus heißen Abgasen kombiniert wird, wie es in der Druckschrift EP-A 0171 570 beschrieben ist. Die Vorrichtung, die in jener Druckschrift beschrieben ist, ergibt in Verbindung mit der Vorrichtung gemäß Fig. 1 der vorliegenden Anmeldung eine Anlage zur Reinigung von Rauchgasen von Schwefel und Stickstoff, wie sie in Fig. 2 zu sehen ist.

Die Vorrichtung besitzt einen Vorkonzentrator 1, einen Nachkonzentrator 2, einen Reaktor 3, eine Elektrolysezelle 4, eine Waschkolonne 5, einen Wärmetauscher 6 und eine Absorbersäule 12. Das Element 1 wird von einem Teilstrom der zu reinigenden Abgase durchströmt. Der andere Teilstrom durchfließt zuerst den Wärmetauscher 6, um dort den gereinigten Abgasstrom auf eine für den Kamin optimale Temperatur zu erwärmen, und wird dann dem ersten Teilstrom am Eingang des Reaktors 3 zugefügt. Die Gesamtmenge der zu reinigenden Rauchgase durchströmt dann die Elemente 3, 5, 12 und 6. Der Nachkonzentrator 2 wird mit Hochtemperaturabgasen gespeist, die direkt hinter dem Economiser des nicht dargestellten Wärmekraftwerks entnommen werden und nach dem Durchtritt durch diesen Konzentrator den in den Vorkonzentrator 1 eingetretenen Abgasen zugemengt werden.

In den Konzentratoren 1 und 2 wird Bromwasserstoffsäure HBr aus dem erwärmten Säuregemisch verdampft und mit den Abgasen mitgerissen, während die höher siedende Schwefelsäure sich anreichert. Im Reaktor gelangen die Abgase mit in Wasser gelöstem Brom in Kontakt, so daß folgende Reaktion abläuft :

$$SO_2 + Br_2 + 2\ H_2O \Longrightarrow H_2SO_4 + 2\ HBr,$$

d.h., es entsteht das erwähnte Säuregemisch. Um diesen Kontakt zu intensivieren, wird das Gemisch ständig umgewälzt und dabei immer wieder im Reaktor versprüht. Ein Teil des Gemisches wird stetig in den Vorkonzentrator eingesprüht und ein anderer in die Elektrolysezelle 4 eingespeist. Diese Zelle wird in

bekannter Weise über Graphitelektroden mit Gleichstrom versorgt und spaltet im anodischen Abteil Bromwasserstoffsäure HBr in molekulares Brom auf. Das Brom gelangt dann zusammen mit dem Rest des Gemisches wieder in den Reaktor zurück.

In der Waschkolonne 5 wird Wasser im geschlossenen Kreislauf immer wieder von oben eingesprüht, während die gereinigten Abgase im Gegenstrom die Kolonne durchströmen. Der Wasserverlust, der sich durch Verdampfen im Reaktor 3 einstellt und zu einer Erhöhung des Wasserstands in der Waschkolonne führen würde, wird dadurch wieder ausgeglichen, daß ein Teil des Wassers aus der Waschkolonne in den Reaktor 3 zurückgepumpt wird. In üblicher Weise werden die in die Konzentratoren, den Reaktor und die Waschkolonne einzuspeisenden Flüssigkeiten durch Pumpen 7 und 11 auf das für das Einsprühen nötige Druckniveau gebracht.

Die aus der Waschkolonne 5 austretenden Rauchgase besitzen nur noch einen kleinen Schwefelanteil, jedoch noch einen hohen Anteil an Stickoxiden. Diese Abgase 13 werden in die Absorbersäule 12 eingespeist, aus der von Stickoxiden weitgehend befreite Rauchgase 14 in Richtung auf den Wärmetauscher 6 und den Kamin entweichen. Die Absorbersäule 12 enthält Rieseleinsätze, über die eine wässrige Lösung eines Eisenchelats, insbesondere Fe(EDTA), rieselt. Der mit Stickoxiden angereicherte Eisenchelatkomplex wird dann in der Elektrolysezelle 4, und zwar dem kathodischen Anteil, wie anhand von Fig. 1 oben erläutert, wieder aufgespalten in den ursprünglichen Eisenchelatkomplex und in Stickstoff, der gasförmig freigesetzt wird. Außerdem entsteht je nach der Stromdichte in der Zelle eine mehr oder weniger große Menge Wasserstoff im kathodischen Abteil.

Durch die Kombination des erfindungsgemäßen Entstickungsverfahrens mit dem Verfahren zur Entfernung von Schwefeldioxid gemäß der Druckschrift EP-A-0 171 570 ergibt sich also ein besonders einfaches und wirtschaftliches Verfahren zur Entgiftung von Rauchgasen, ohne daß in nennenswertem Umfang Nebenreaktionen ablaufen würden, die teure Hilfsaggregate erforderlich machen würden.

Die Erfindung ist jedoch nicht auf das im einzelnen dargestellte Ausführungsbeispiel gemäß Fig. 2 beschränkt. So kann die Entstickung auch isoliert oder in Verbindung mit anderen Verfahren durchgeführt werden, wobei sich dann nur die im anodischen Abteil der Elektrolysezelle 4 ablaufenden Prozesse ändern. Auch läßt sich die Erfindung mit anderen Komplexbildnern als EDTA durchführen und auch andere Metalle als Eisen, insbesondere Kobalt oder Nickel, können zur Absorption der Stickoxide herangezogen werden.

## PATENTANSPRÜCHE

1. Verfahren zur Entstickung von Rauchgasen durch Absorption der Stickoxide in einer wässrigen Lösung eines Metallkomplexes, wobei das Metall aus der Gruppe von Metallen ausgewählt wird, die zumindest Eisen enthält, dadurch gekennzeichnet, daß die Gruppe weiter Kobalt und Nickel enthält und daß der mit den Stickoxiden angereicherte Metallkomplex in eine Elektrolysezelle (4) gebracht wird, in deren Kathodenabteil der Stickstoff reduziert wird.

2. Verfahren nach Anspruch 1, dadurch gekennzeichnet, daß der Metallkomplex ein Eisenchelatkomplex ist.

3. Verfahren nach Anspruch 1, dadurch gekennzeichnet, daß der Metallkomplex ein Eisen(II)-Ethylendiamintetracetat-Komplex ist.

4. Verfahren nach einem der Ansprüche 1 bis 3, dadurch gekennzeichnet, daß dem Anodenabteil der Elektrolysezelle (4) Bromwasserstoffsäure zugeführt wird.

5. Vorrichtung zur Durchführung des Verfahrens nach einem der Ansprüche 1 bis 3, dadurch gekennzeichnet, daß eine Absorbersäule (12), die eine wässrige Lösung des Metallkomplexes enthält und von den Rauchgasen durchströmt wird, und eine Elektrolysezelle (4) vorgesehen sind, deren Kathodenabteil von der vom Reaktor kommenden Lösung gespeist wird und selbst wieder die Absorbersäule speist.

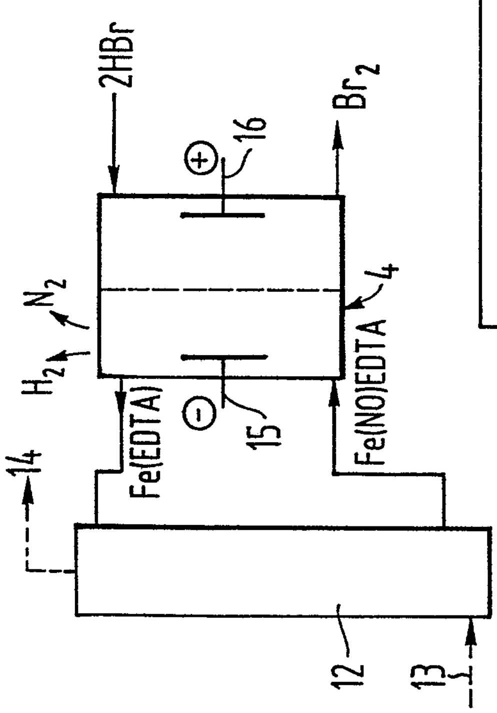

2HBr
N2
H2
Br2
16
15
4
14
Fe(EDTA)
Fe(NO)EDTA
12
13


FIG. 1

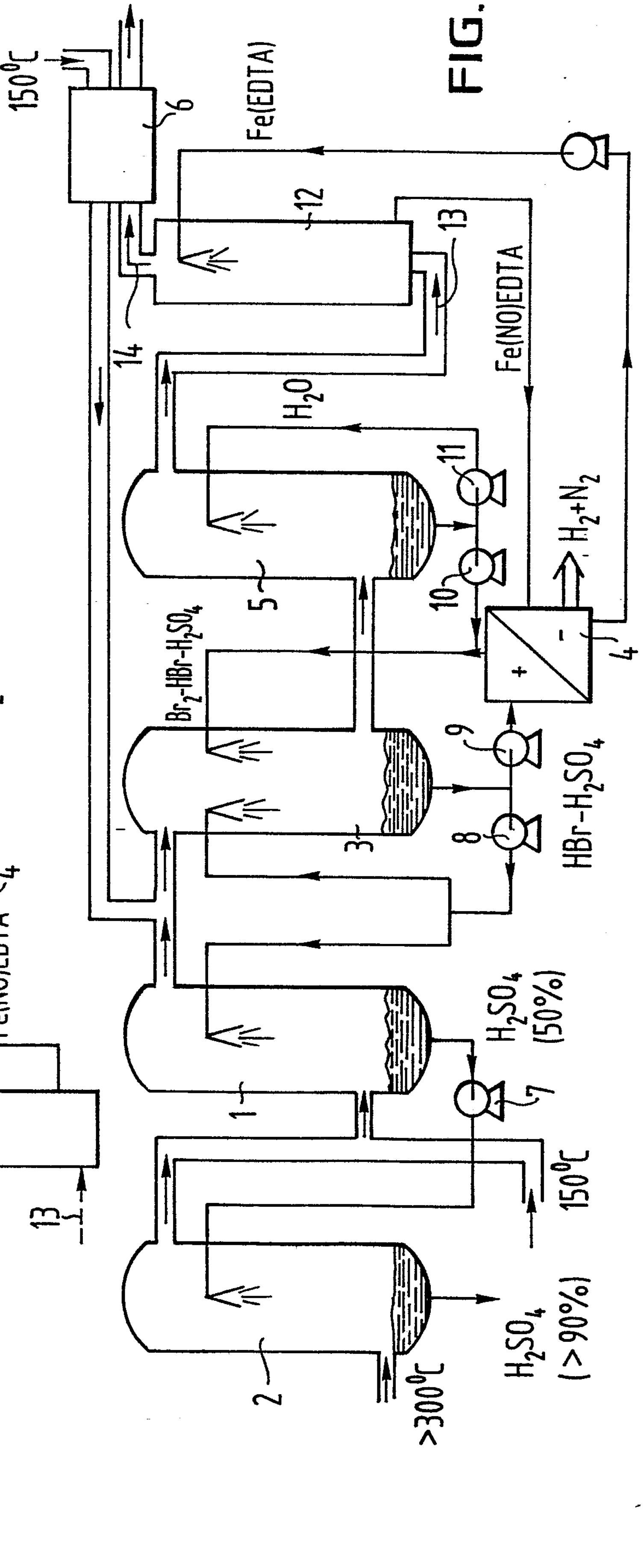

150°C
6
Fe(EDTA)
12
13
14
Fe(NO)EDTA
H2O
11
10
H2+N2
5
4
Br2-HBr-H2SO4
9
8
3
HBr-H2SO4
1
7
H2SO4 (50%)
150°C
2
>300°C
H2SO4 (>90%)


FIG. 2

0243889

Europäisches Patentamt

# EUROPÄISCHER RECHERCHENBERICHT

Nummer der Anmeldung

EP 87 10 5977

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-1 251 900 (H. KOPPERS)<br>--- | | B 01 D 53/34<br>C 10 K 1/10<br>C 10 K 1/12 |
| A | FR-A-2 255 938 (CHISSO ENGINEERING CO.)<br>----- | | |
| | | | RECHERCHIERTE SACHGEBIETE (Int. Cl.4) |
| | | | B 01 D<br>C 10 K |

Der vorliegende Recherchenbericht wurde für alle Patentansprüche erstellt.

| Recherchenort | Abschlußdatum der Recherche | Prüfer |
|---|---|---|
| DEN HAAG | 29-07-1987 | PYFFEROEN K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82